# EUROPÄISCHE PATENTSCHRIFT

(11) **EP 1 898 115 B1**
(45) Veröffentlichungstag und Bekanntmachung des Hinweises auf die Patenterteilung: **26.11.2008**
(21) Anmeldenummer: 07017186.3
(22) Anmeldetag: 03.09.2007
(51) Int. Cl.: F16D 65/097, F16D 55/224

(54) **Fahrzeug-Scheibenbremse**
Vehicle disc brake
Frein à disque de véhicule

(30) Priorität: 02.09.2006 DE 102006041235
(43) Veröffentlichungstag der Anmeldung: 12.03.2008
(73) Patentinhaber: BPW Bergische Achsen KG, 51674 Wiehl (DE)
(72) Erfinder: Schwarz, Michael, Dipl.-Ing., 51469 Berg.-Gladbach Groneu (DE)
(74) Vertreter: Christophersen & Partner

(56) Entgegenhaltungen:
- EP-A- 1 067 304
- EP-A- 1 443 234
- DE-A1- 3 526 114

## Beschreibung

Die Erfindung betrifft eine Fahrzeug-Scheibenbremse mit beiderseits einer Bremsscheibe in Belagschächten angeordneten Bremsbelägen, die sich jeweils aus einer Rückenplatte und einem der Bremsscheibe zugewandten Reibbelag zusammensetzen, wobei die Bremsbeläge zu ihrer Aufnahme in dem jeweiligen Belagschacht mit ersten, an der Umfangskontur der Rückenplatte ausgebildeten Aufnahmeflächen zur Übertragung der Bremsreaktionskräfte in Drehrichtung, sowie zweiten Aufnahmeflächen zur Abstützung der Bremsbeläge zur Scheibenbrems-Drehachse hin versehen sind, und die Bremsbeläge gegen ein Herausfallen nach außen durch einen Niederhalter gesichert sind, der sich quer zu den Bremsbelägen über die Belagschächte erstreckt, und gegen den die Bremsbeläge mit ihrer Rückenplatte von unten anliegen.

Eine solche Fahrzeug-Scheibenbremse offenbart die DE 35 26 114 A1. Die zu beiden Seiten der Bremsscheibe angeordneten Bremsbeläge befinden sich in Belagschächten des Bremsgehäuses. Zur Führung der Bremsbeläge weisen die Belagschächte zwei zueinander beabstandete Seitenwände auf, über die ein großer Teil der Bremsreaktionskräfte von den Bremsbelägen auf das Bremsgehäuse abgeführt wird. Nach unten, d.h. radial zur Scheibenbrems-Drehachse hin, werden die Bremsbeläge ebenfalls abgestützt. Nach radial außen hin erfolgt die Sicherung der Bremsbeläge in den Bremsschächten durch einen lösbar an dem Bremsgehäuse befestigten Niederhalter. Dieser besteht aus einer durch mehrfaches Biegen geformten Drahtfeder mit einem ersten Schenkelpaar und einem quer dazu angeordneten zweiten Schenkelpaar. Das erste Schenkelpaar dient der Befestigung der Drahtfeder am Bremsgehäuse, wohingegen das zweite Schenkelpaar der Feder unmittelbar auf den Außenrändern der Bremsbelag-Rückenplatten aufliegt und daher nachteiligerweise bei jedem Bremsvorgang einem Reibungsverschleiß durch die Bremsbeläge ausgesetzt ist.

Die Drahtfeder ist ferner unmittelbar der im Bremsbetrieb von der Bremsscheibe sowie den Bremsbelägen ausgehenden Hitze ausgesetzt ist. Dies kann auf Dauer zu einer Schwächung der Drahtfeder führen, insbesondere wenn diese aus einem Federstahl besteht.

Aus der DE 19 27 459 A1 ist eine Scheibenbremse bekannt, bei der die Bremsbeläge durch am Bremsgehäuse befestigte, lange Haltestifte gehalten werden. Die Haltestifte erstrecken sich axial zur Bremse und ermöglichen, indem sie Löcher in den Rückenplatten der Bremsbeläge durchdringen, ein Gleiten der Bremsbeläge in Richtung zu der Bremsscheibe und von dieser weg. Zur Erzielung einer definierten Lage der Bremsbeläge drückt von außen her eine Feder auf beide Bremsbeläge. Hierzu stützt sich ein kanalförmig geformter Mittelbereich der Feder asymmetrisch an Ausnehmungen ab, mit denen die Rückenplatten der Bremsbeläge an ihren Außenrändern versehen sind.

Auch bei der Scheibenbremse nach der DE 19 27 459 A1 ist von Nachteil, daß die Feder unmittelbar der im Bremsbetrieb von der Bremsscheibe sowie den Bremsbelägen ausgehenden Hitze ausgesetzt ist. Dies kann auf Dauer zu einer Schwächung der Feder führen, insbesondere wenn diese aus einem Federstahl besteht. Zudem ist die Feder bei jedem Bremsvorgang der Reibung durch die Bremsbeläge ausgesetzt.

Mit der Erfindung angestrebt wird daher eine erhöhte Lebensdauer jener Bauteile der Fahrzeug-Scheibenbremse, durch welche die Bremsbeläge in ihren Belagschächten gesichert werden.

Hierzu wird bei einer Fahrzeug-Scheibenbremse der eingangs genannten Art vorgeschlagen, daß sich auf der Außenseite des Niederhalters ein am Bremssattel bzw. -gehäuse befestigtes Federelement abstützt.

Vorteilhafte Ausgestaltungen der erfindungsgemäßen Fahrzeug-Scheibenbremse sind in Unteransprüchen angegeben. Ausführungsbeispiele werden nachfolgend anhand der Zeichnungen erläutert. Darin zeigen:
- Fig. 1: einen Teilschnitt durch ein erstes Ausführungsbeispiel einer Scheibenbremse;
- Fig. 2: die Scheibenbremse nach Figur 1 bei teilweise geöffnetem Niederhalter;
- Fig.3: einen Teilschnitt durch die Scheibenbremse entsprechend der in Figur 1 eingezeichneten Schnittebene III - III;
- Fig. 4: in perspektivischer, teils geschnittener und auf die hier interessierenden Komponenten reduzierten Darstellung ein zweites Ausführungsbeispiel einer Scheibenbremse mit zwei Bremsbelägen, wobei Bremssattel und Bremsgehäuse geschnitten dargestellt sind;
- Fig. 5: die Scheibenbremse nach Fig. 4 in einer Seitenansicht;
- Fig. 6: einen vergrößerten Ausschnitt aus der Fig. 5 in Vollschnitt-Darstellung;
- Fig. 7: einen Schnitt gemäß der in Fig. 6 bezeichneten Schnittebene VII - VII;
- Fig. 8 a - c: die Scheibenbremse nach Fig. 4 in anderer perspektivischer Darstellung und in drei verschiedenen Stufen der Zusammensetzung, um so die Einzelteile besser erkennen zu können,
- Fig. 9a: in perspektivischer Darstellung eine Scheibenbremse gemäß den Darstellungen in Fig. 4 bis Fig. 8c mit anders ausgeführten Bremsbelägen;
- Fig.9b: eine der Darstellung in Figur 6 entsprechende Schnittdarstellung der Scheibenbremse aus Fig. 9a;
- Fig. 10a: eine schematische Darstellung des Zusammenwirkens des Niederhalters mit den Bremsbelägen;
- Fig. 10b: eine der Figur 10a entsprechende schematische Darstellung, jedoch bei stark abgenutzten Bremsbelägen;
- Fig. 11: in perspektivischer Ansicht eine Ausführung eines Niederhalters;
- Fig. 12: eine Draufsicht einer weiteren Ausführung eines Niederhalters und
- Fig. 13: eine Schnittdarstellung des Niederhalters aus Fig. 12 gemäß der Schnittlinie XIII-XIII in Fig. 12.

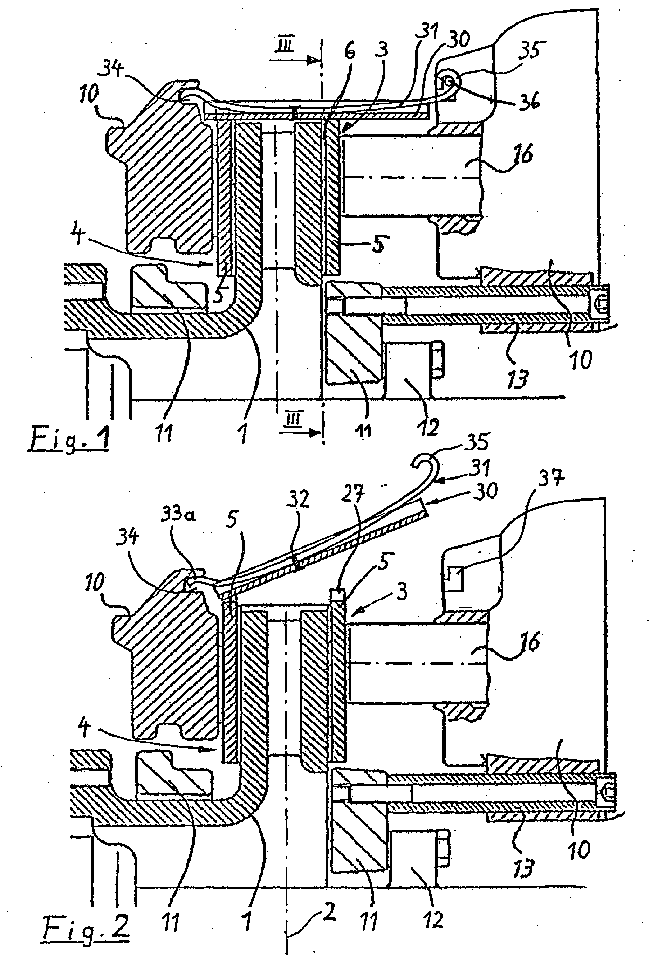

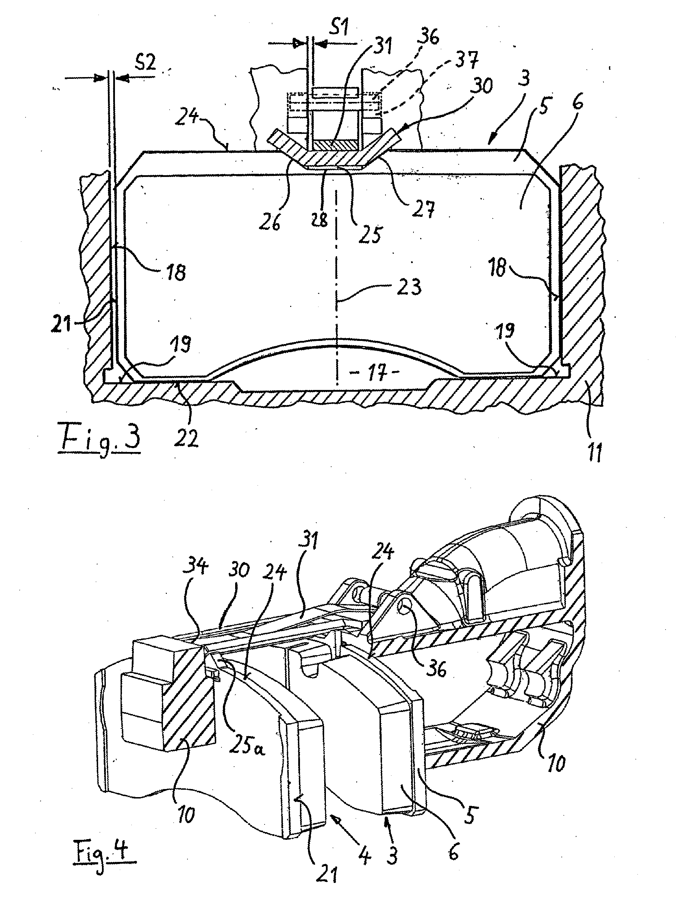

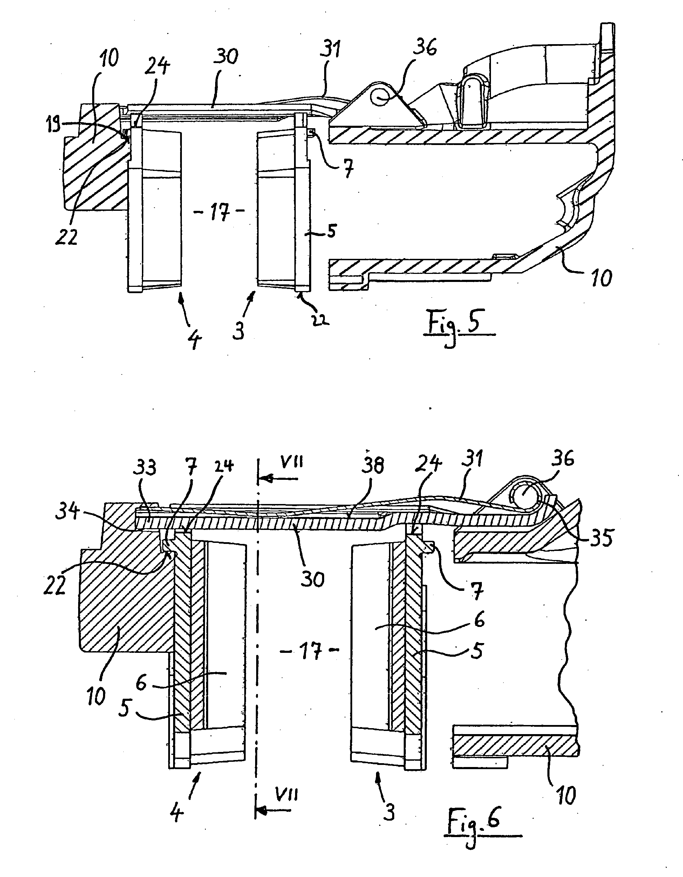

In den Fign. 1 bis 3 ist ein erstes und in den Fign. 4 bis 9b ein zweites Ausführungsbeispiel einer Fahrzeug-Scheibenbremse dargestellt. Bei der Ausführung in den Fign. 1 bis 3 handelt es sich um eine Fahrzeug-Scheibenbremse mit einem an einem achsfesten Bremsträger 12 festgelegten Bremsrahmen 11, der die Bremsscheibe 1 nach Art eines Rahmens umgibt und den fahrzeugaußenliegenden Bremsbelag 4 in einer Öffnung aufnimmt. Bei dem zweiten, in den Fign. 4 bis 9b dargestellten Ausführungsbeispiel handelt es sich um eine rahmenlose Fahrzeug-Scheibenbremse, bei welcher ein die Bremsscheibe 1 umgreifender Rahmen 11 nicht vorgesehen ist. Bei dieser rahmenlosen Bremskonstruktion wird der fahrzeugaußenliegende Bremsbelag 4 im Bremsgehäuse bzw. Bremssattel gehalten.

Figur 1 zeigt den Grundaufbau der Fahrzeug-Scheibenbremse mit einer Bremsscheibe 1, hier des innen belüfteten Bautyps, den beiderseits der Bremsscheibe 1 angeordneten Bremsbelägen 3,4, dem Bremsträger 12, dem Bremsgehäuse bzw. Bremssattel 10, und dem am Bremsträger 12 angeschraubten Bremsrahmen 11.

Im Bremsgehäuse 10 längsbeweglich geführt sind Druckstempel 16, welche sich gegen den inneren Bremsbelag 3 abstützen. Der äußere Bremsbelag 4 hingegen ist, wie bei Scheibenbremsen des Gleitsattel- bzw. Schwimmsattel-Typs üblich, unmittelbar gegen den Bremssattel 10 abgestützt.

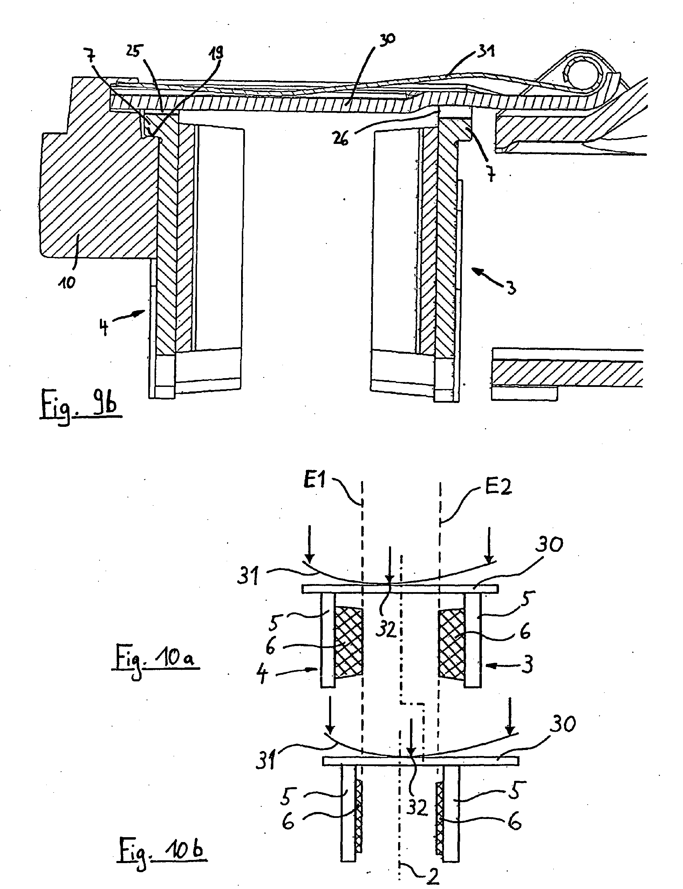

Bei der Darstellung nach den Figuren 1 und 2 sind die Reibbeläge der Bremsbeläge 3, 4 bereits stark abgenutzt. Demgegenüber zeigt Figur 10a die neuen, frischen Bremsbeläge 3, 4, jeweils bestehend aus der aus einem Gussmaterial gefertigten Rückenplatte 5 sowie den zur Bremsscheibe hin weisenden Reibbelägen 6.

Die Bremsbeläge 3, 4 sind bei der ersten Ausführung auf beiden Seiten der Bremsscheibe 10 in Belagschächten 17 des Bremsrahmens 11 angeordnet, was im Folgenden anhand der Darstellung in Fig. 3 näher erläutert wird. Die Belagschächte 17 dienen der Aufnahme und je nach Anordnung auch der Führung der Bremsbeläge 3,4 und sind zu diesem Zweck mit entsprechenden Aufnahme- und Führungsflächen 18, 19 versehen. Es handelt sich hierbei um passgenau gearbeitete Flächen, welche z.B. durch Schleifen oder durch Fräsen hergestellt werden. Erste Aufnahmeflächen 18 erstrecken sich parallel zueinander und weisen aufeinander zu. Sie übernehmen den größten Teil der Bremsreaktionskräfte. Zweite Aufnahmeflächen 19 weisen im Wesentlichen radial nach außen. Sie befinden sich in ein- und derselben Ebene. Auch die zweiten Aufnahmeflächen 19 übernehmen einen Teil der Bremsreaktionskräfte, vor allem aber stützen sie die Bremsbeläge 3 zur Scheibenbrems-Drehachse hin ab. Korrespondierend zu den Aufnahmeflächen 18, 19 des Belagschachts 17 sind auch die Bremsbeläge 3, 4 an ihrer Rückenplatte 5, deren Kontur gegenüber der Außenkontur des Reibbelags 6 vergrößert ist, mit Aufnahme- und Führungsflächen versehen. Erste Aufnahmeflächen 21 der Rückenplatte 5 können sich gegen die Flächen 18 des Belagschachts, und zweite Aufnahmeflächen 22 gegen die Flächen 19 des Belagschachts abstützen. Beim ersten Ausführungsbeispiel sind die zweiten Aufnahmeflächen 22 sowohl des fahrzeuginnenliegenden als auch des fahrzeugaußenliegenden Bremsbelags 3, 4 an der Kontur der Rückenplatte 5 angeordnet. Vorzugsweise sind, wie dargestellt, die Bremsbeläge 3, 4 symmetrisch in Bezug auf ihre Bremsbelag-Mittellinie 23 gestaltet. Jedoch sind auch asymmetrische Gestaltungen in Bezug auf die Bremsbelag-Mittellinie 23 möglich.

Im Gegensatz zu dem ersten Ausführungsbeispiel nach den Fign. 1 bis 3 wurde bei dem zweiten Ausführungsbeispiel der Bremse auf einen die Bremsscheibe 1 umfassenden Bremsrahmen 11 verzichtet, weshalb die Aufnahme des fahrzeugaußenliegenden Bremsbelags 4 in einem Belagschacht des Bremssattels erfolgt. Die Fign. 4 bis 9b lassen einen Vorsprung 7 an den Rückenplatten 5 erkennen, über den der äußere Bremsbelag 4 nach radial innen hin am Bremssattel 10 abgestützt ist. Die Abstützung des äußeren Belags in Umfangsrichtung erfolgt über an der Umfangskontur der Rückenplatte 5 ausgebildete Aufnahmeflächen 21. Die Aufnahme des fahrzeuginneren Bremsbelags 3 erfolgt analog der anhand von Fig. 3 beschriebenen Abstützung.

Der Vorsprung 7 ist an der Belagrückenplatte 5 angeformt und hat, dem Außenrand 24 abgewandt, eine Unterseite, die beim fahrzeugaußenliegenden Bremsbelag 4 als Aufnahmefläche 22 zur Abstützung gegen die Aufnahmefläche 19 des Bremssattels 10 dient. Dies ist der einzige Halt des äußeren Bremsbelags 4 zur Bremsscheibenachse hin. Auch der andere Belag 3 hat einheitlich den Vorsprung 7, nur ist er dort ohne Funktion, da die Abstützung des innenliegenden Bremsbelags über die an der Kontur der Rückenplatte 5 vorgesehene Aufnahmefläche 22 erfolgt.

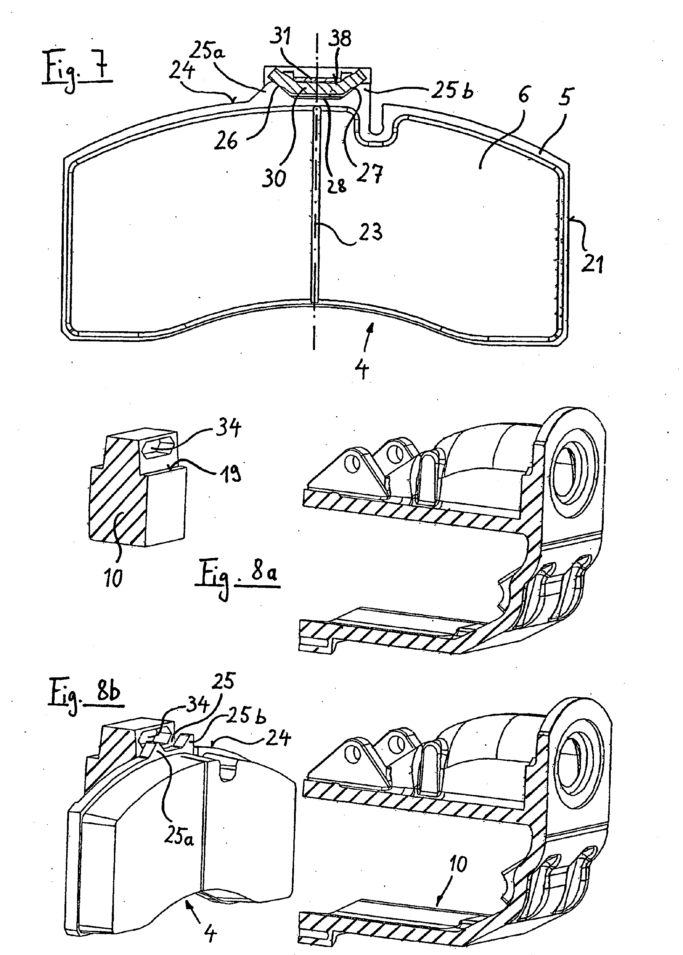

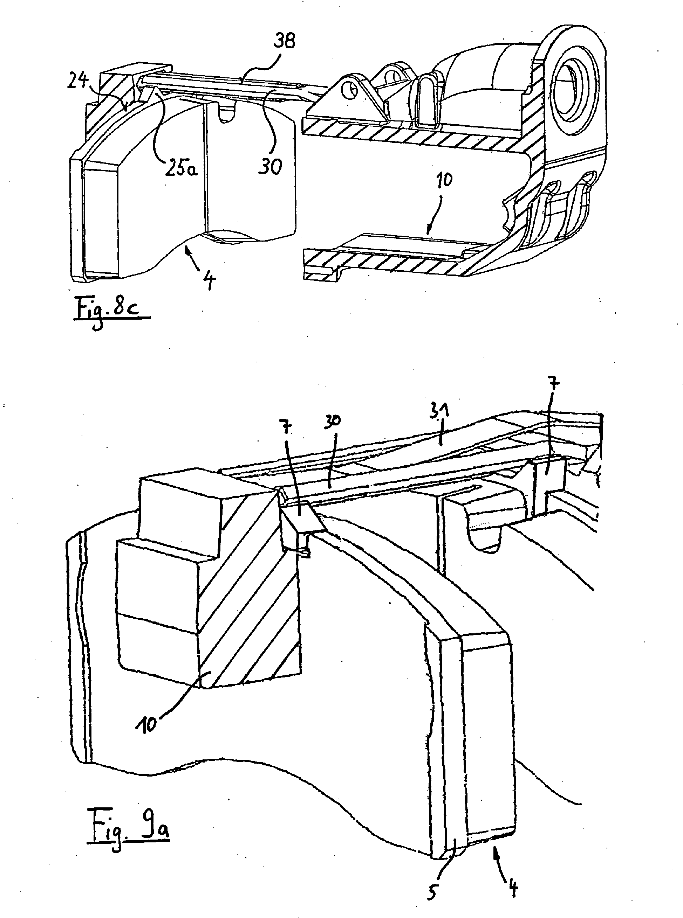

Die Abstützung des fahrzeugaußenliegenden Bremsbelags 4 erfolgt in Richtung zur Drehachse der Fahrzeug-Scheibenbremse über den an der Rückseite der Belagträgerplatte 5 einstückig angeformten Vorsprung 7. Wird der Bremspad 4 auf der fahrzeuginnenliegenden Seite der Bremsscheibe 1 montiert, so bleibt der Vorsprung 7 bzw. die an dessen Unterseite vorgesehene Aufnahmefläche 22 ohne Funktion, d. h. die Abstützung in Richtung der Bremsscheibenachse erfolgt über die an der Umfangskontur der Belagträgerplatte 5 angeformte Aufnahmefläche 22. Die Bremsklötze 3, 4 sind jeweils mit einer an der Umfangskontur ausgebildeten Aufnahmefläche 22 und einer an dem rückseitig an der Belagträgerplatte 5 angeformten Vorsprung 7 vorhandenen Aufnahmefläche 22 versehen. Die Aufnahmefläche 22 am Vorsprung 7 und die an der Kontur der Belagträgerplatte 5 weisen in radialer Richtung einen Abstand zueinander auf, der dem radialen Abstand der fahrzeugaußen am Bremssattel 10 vorgesehenen Aufnahmefläche 19 (vgl. Fig. 8a) zu der fahrzeuginneren Aufnahmefläche 19 (vgl. Fig. 3) entspricht.

Eine zweite Ausführungsform der Bremsbeläge 3, 4 für eine rahmenlose Bremse ist in Fig. 9a in einer perspektivischen Darstellung und in Fig. 9b in einer Schnittdarstellung zu erkennen. Im Gegensatz zu den anhand der Fign. 4 bis 8c beschriebenen Bremsbelägen 3, 4 weisen die Bremsbeläge 3, 4 in den Fign. 9a und 9b an der Rückenplatte 5 jeweils einen Vorsprung 7 auf, der sich nach radial außen bis hin zum Niederhalter 30 erstreckt. Der Vorsprung 7 steht aus der Fläche der Rückenplatte 5 hervor und erstreckt sich nach radial außen bündig bis in die Kontur der Öffnung 25. Hierdurch ergibt sich eine gegenüber der vorstehend beschriebenen Ausführungsform des Bremsbelags verbreiterte Anlage zwischen dem Niederhalter 30 und den Anlageflanken 26, 27 der in diesem Bereich eine größere Materialstärke aufweisenden Belagrückplatte 5, vgl. Fig. 9b. Die verbreiterte Anlage wird bereits beim Gießen der Rückenplatten 5 an diesen ausgebildet.

Diese Ausführung hat sich gegenüber der vorstehend anhand der Fign. 4 bis 8c beschriebenen Ausführung als vorteilhaft erwiesen, da es bei der zuvor beschriebenen Ausführungsform mit balkenförmigem Vorsprung 7 insbesondere bei unebenen Straßenverhältnissen zu einem Verkanten des nur über die schmale Balkenkontur gehaltenen Bremspads 4 im außenliegenden Belagschacht bis hin zu Abrissen des Vorsprungs 7 und damit einem Ausfall der Bremse kommen kann. Durch die verbreiterte Anlage zwischen dem Niederhalter 30 und der Belagrückenplatte 5 werden diese Gefahren deutlich reduziert. Der Vorsprung 7 füllt den Raum zwischen der Aufnahmefläche 19 des Bremssattels 10 und den Flanken 26 und 27, wodurch sich eine durchgehende, auch bei schwierigen Straßenverhältnissen zuverlässige Abstützung ergibt. Mit der vergrößerten Anlagefläche des Bremspads 4 am Niederhalter 30 ergeben sich insgesamt geringere Flächenpressungen. Die Kippneigung des außen liegenden Bremspads 4 ist selbst bei sehr ungünstigen Straßenverhältnissen deutlich reduziert. Auch die Gefahr von Abreißern ist reduziert.

Nachfolgend werden Einzelheiten der Herausfallsicherung für die Bremsbeläge erläutert. In den Figuren sind verschiedene Ausführungen der Sicherungselemente, beispielsweise des Niederhalters 30, dargestellt. Die jeweils dargestellten Ausführungen sind nicht auf die konkrete Ausführungsform der Fahrzeug-Scheibenbremse, etwa eine rahmenlose oder eine mit einem Rahmen versehene Fahrzeug-Scheibenbremse beschränkt, sondern können in Fahrzeugbremsen verschiedener Bautypen mit verschiedenen Bremsbelägen eingesetzt werden.

Beim ersten Ausführungsbeispiel der Fahrzeug-Scheibenbremse gemäß den Darstellungen in den Fign. 1 bis 3 ist der Außenrand 24 der Rückenplatte 5 der Bremsbeläge 3, 4 im Mittelbereich als nach innen zurückspringende oder auch nach außen vorspringende Kontur gestaltet. Dargestellt ist als Kontur eine zurückspringende Ausnehmung 25 nach Art einer Kerbe. Diese ist bezüglich der Bremsbelag-Mittellinie 23 symmetrisch in Gestalt eines sich zur Scheibenbrems-Drehachse hin verjüngenden Trapezes. Die Kontur bzw. Ausnehmung 25 stützt sich gegen einen Niederhalter 30 ab. Dieser erstreckt sich, wie insbesondere auch Figur 1 erkennen läßt, als federbelasteter Bügel quer zu den Bremsbelägen 3, 4 über die Belagsschächte 17 hinweg, und er kann seinerseits durch noch im Einzelnen beschriebene Hilfsmittel an dem Bremssattel bzw. Bremsgehäuse 10 festlegbar sein.

Gemäß Figur 3 ist die Querschnittsform des Niederhalters 30 an die Form der korrespondierenden Kontur der Rückenplatte 5 angepasst. Beim Ausführungsbeispiel ist der Niederhalter 30 ein starres Metallprofil mit sich nach unten verjüngendem, trapezförmigem Querschnitt. Auf diese Weise stützt sich der Niederhalter 30 an den beiden schrägen Flanken 26, 27 der Ausnehmung 25 zugleich ab, wobei der Niederhalter 30 an beiden Flanken 26, 27 flächig anliegt. In einem Bereich 28 zwischen den Flanken 26, 27 liegt der Niederhalter 30 nicht an der Rückenplatte an.

Der Niederhalter 30 übt, indem er durch eine Druckfeder 31 belastet wird, einen radial nach innen gerichteten Druck auf die Bremsbeläge 3, 4 aus, wodurch diese mit ihren zweiten Führungsflächen 22 gegen die Aufnahmeflächen 19 der Belagschächte 17 gedrückt werden, und ferner die Bremsbeläge nicht aus den Belagschächten herausfallen können. Zur Erzielung dieses Drucks ist der Niederhalter 30 durch ein Federelement 31 mit einer radial nach innen gerichteten Kraft beaufschlagt. Als Federelement 31 dient eine gebogene Blattfeder, welche sich mit ihrer Außenbiegung außen auf dem langgestreckten Niederhalter 30 abstützt. Sie kann über ein Niet 32 (Fign. 1 und 2) mit dem Niederhalter 30 verbunden sein.

Die Blattfeder 31 ist parallel, d.h. längs des starren Niederhalters 30 angeordnet. Auf diese Weise befindet sich die Blattfeder 31, bezogen auf den Bremsschacht, gleichsam hinter dem Niederhalter 30. Die Blattfeder 31 ist dort besser gegen jene Hitze abgeschirmt, die im Bremsbetrieb von der Bremsscheibe 1 ebenso wie von den Bremsbelägen 3, 4 ausgeht.

Mit ihrem einen Ende 33 a sitzt die Blattfeder 31 in einer Ausnehmung 34 des Bremssattels 10. Das andere Ende der Blattfeder 31 ist zu einem Federauge 35 geformt. Dieses ist um einen Befestigungsbolzen 36 geführt, der wiederum an dem Bremsgehäuse festlegbar ist. Hierzu zeigt Fig. 2 die gelöste Blattfeder 31 ohne Befestigungsbolzen, und Fig. 1 die Einspannung der Blattfeder mittels des in einer Öffnung 37 des Bremsgehäuses verriegelten Befestigungsbolzens 36. Das Ende der Blattfeder 31 muss nicht zu einem Federauge geformt sein, denkbar sind auch Lösungen mit Teilfederaugen, Abwinklungen usw., die eine Fixierung an dem Bolzen 36 erlauben.

Gemäß Fig. 3 ist das Federelement 31 in Umfangsrichtung der Bremsscheibe 1 mit einem beidseitigen Spiel S1 in dem Bremssattel 10 geführt. Auf diese Weise wird die Bewegung der Bremsbeläge 3, 4 in ihren jeweiligen Belagschächten 17 nicht durch den Niederhalter 30 beeinträchtigt. Dieses in Drehrichtung bestehende Spiel der Bremsbeläge 3, 4 in ihren Schächten 17 ist in Figur 3 mit S2 bezeichnet.

Bei der Ausführungsform nach den Fign. 1 bis 3 ist der bügelförmige Niederhalter 30 kürzer als die Blattfeder 31, und nur die Blattfeder 31 ist mit ihren Enden, z. B. dem Ende 33a, in Öffnungen oder Ausnehmungen des Bremsgehäuses bzw. des Bremssattels 10 festgelegt. Durch eine entsprechende Verlängerung des bügelförmigen Niederhalters 30 ist es jedoch auch möglich, diesen mit seinen Enden bis in Öffnungen oder Ausnehmungen des Bremsgehäuses hineinzuführen, und ihn trotzdem in Drehrichtung zur Sicherstellung des Spiels S1 beweglich zu halten. Im Falle eines Bruchs oder eines sonstigen Versagens des Federelements 31 sind die Bremsbeläge dann immer noch durch den Niederhalter 30 gegen ein Herausfallen aus ihren Belagschächten gesichert.

Im Folgenden werden Einzelheiten der im Zusammenhang mit dem zweiten Ausführungsbeispiel einer rahmenlosen Fahrzeug-Scheibenbremse gemäß den Fign. 4 bis 9b realisierten Herausfallsicherung erläutert. Gleiche oder gleich wirkende Bauteile wie beim ersten Ausführungsbeispiel sind mit den selben Bezugszeichen versehen.

Abweichend von dem ersten Ausführungsbeispiel ist, wie insbesondere Fig. 7 erkennen läßt, die Kontur der Bremsbeläge 3, 4 an deren Außenrand 24. Die Kontur weist anstelle einer Ausnehmung zwei Vorsprünge 25a, 25b an den Rückenplatten 5 auf. Die Vorsprünge 25a, 25b sind einander zugewandt jeweils mit den Flanken 26 bzw. 27 versehen, so daß sich wiederum eine in etwa trapezförmige Kontur für die Anlage des im Querschnitt ebenfalls trapezförmigen Niederhalters 30 ergibt.

Im Vergleich zu dem ersten Ausführungsbeispiel ist der Niederhalter 30 soweit verlängert, daß er mit beiden Enden bis in Öffnungen bzw. Ausnehmungen des Bremsgehäuses hineinragt. Das eine Ende 33 des Niederhalters 30 reicht hierzu in die Ausnehmung 34 des Bremssattels 10, auf seinen Umfang bezogen, kontaktlos bzw. schwimmend hinein. Das andere Ende führt bis unter den am Bremsgehäuse 10 festgelegten Befestigungsbolzen 36. Selbst im Fall eines Verlustes oder eines Bruchs des Federelementes 31 kann sich der Niederhalter 30 nicht vom Bremsgehäuse lösen.

Die Blattfeder 31 stützt sich von außen gegen den im Vergleich starr ausgebildeten Niederhalter 30 ab. Für diese Abstützung besonders geeignet ist jene Rinne 38 des Niederhalters 30, welche sich außen infolge dessen trapezförmigen Querschnittes ergibt. Wiederum ist die Blattfeder 31 parallel, d.h. längs des Niederhalters 30 angeordnet, wodurch sie sich, bezogen auf den Belagschacht 17, "hinter" dem Niederhalter 30 befindet. Die Blattfeder 31 ist dort besser gegen jene durch Wärmeübergang und durch Strahlungswärme übertragene Hitze abgeschirmt, die im Bremsbetrieb von der Bremsscheibe 1 ebenso wie von den Bremsbelägen 3, 4 ausgeht. Vor allem im Dauerlastbetrieb wird eine erhöhte Lebensdauer des aus Federstahl bestehenden Federelementes 31 erzielt.

Die Befestigung des Federelementes 31 erfolgt bei der Ausführungsform nach den Fign. 4 bis 9b analog der Befestigung des Niederhalters 30, d.h. das eine Ende der Blattfeder 31 sitzt in der Ausnehmung 34, wohingegen das andere Ende den Befestigungsbolzen 36 umschließt.

Die Vorbiegung der aus Federstahl bestehenden Blattfeder 31 ist dergestalt, daß diese, wie bereits beschrieben, nur an einem Abstützungsort 32 in der langgestreckten Rinne 38 des Niederhalters 30 anliegt.

Es ist von Vorteil, wenn die Blattfeder 31 nur an einem Ort am darunter liegenden Niederhalter 30 aufliegt. Dies kann, muß aber nicht der Ort des Niets 32 sein. Dies wird im Folgenden anhand der Fign. 10 a und 10 b erläutert.

Mit E1 ist die Anlageebene des Bremsbelags 4 an der Bremsscheibe, und mit E2 die Anlageebene des Bremsbelags 3 an der Bremsscheibe bezeichnet. Der Abstützungsort 32 des Federelementes 31 ist so gewählt, daß dessen Krafteinleitungspunkt im Falle neuer, vollständiger Reibbeläge 6 (Fig. 10 a) links, und im Falle vollständig verschlissener Reibbeläge 6 (Fig. 10 b) rechts der Bremsscheiben-Mittelebene 2 liegt. Der maximale Versatz des Krafteinleitungspunktes 32 in Bezug auf die Bremsscheiben-Mittelebene 2 ist geringer, als das Maß des zulässigen Reibbelag-Verschleißes. Auf diese Weise wird eine über die Lebensdauer der Bremsbeläge optimale Druckverteilung erzielt.

Der Bremsbelag 4 erfährt gegenüber dem Niederhalter 30 keine Relativbewegung bzw. wandert mit zunehmendem Verschleiß mit diesem gemeinsam auf die axial ortsfeste Bremsscheibe 1 zu. Dagegen ist die Bewegung des von dem Druckstempel 16 kraftbeaufschlagten Bremsbelags 3 gegenüber dem Niederhalter 30 gegenläufig. Der Krafteinleitungspunkt 32 bewegt sich somit auf den Bremsbelag 3 zu. Eine je hälftige Kraftbeaufschlagung auf die beiden Rückenplatten 5 kann über die gesamte Lebensdauer der Bremsbeläge 3, 4 nicht erzielt werden. Ein ausreichendes Optimum ist gegeben, wenn der Krafteinleitungspunkt 32 um das Verschleißmaß eines Reibbelages abgewandt dem Druckstempel 16 aus der Mitte heraus versetzt ist.

Es kann von Vorteil sein, wenn der Niederhalter 30 mit der Blattfeder 31 in Umlaufrichtung bei Vorwärtsfahrt etwas versetzt in dem Bremsgehäuse 10 aufgenommen ist. Auf diese Weise legt sich der symmetrisch zu seiner Bremsbelag-Mittellinie 23 gestaltete Bremsbelag 3, 4 beim Bremsen immer an der Ablaufseite an.

Von Vorteil ist die neuartige Anordnung der Bauteile Federelement 31, Niederhalter 30 und Rückenplatten 5 der Beläge 3, 4 hinsichtlich ihrer Relativbewegungen zueinander. Die Bewegung der Bremsbeläge im Belagschacht 17, hervorgerufen durch die Mitnahme von der Bremsscheibe 1 beim Bremsvorgang und durch Erschütterungen im Fahrbetrieb, verursacht kaum Reibung an dem Federelement 31. Die reibungsempfindliche Blattfeder 31 ist sowohl gegenüber dem Bremsgehäuse bzw. -sattel 10 als auch am Abstützort 32 hinsichtlich dieser Bewegung begrenzt schwimmend gelagert, so daß sich die schädliche Reibung auf insgesamt großer Fläche günstig verteilt. Darüber hinaus ist die Blattfeder 31 frei von solchen Gleitbewegungen, welche aus der Zustellung des inneren Bremsbelages 3 herrühren. Diese verschleißende Reibung findet ausschließlich zwischen der stark dimensionierten Rückenplatte 5 und dem entsprechend widerstandsfähigen Niederhalter 30 statt. Von Vorteil sind hier die flächigen Kontaktstellen zwischen diesen zwei Bauteilen. Allerdings wäre selbst eine Linienberührung bei diesen starr ausgebildeten Bauteilen noch hinreichend.

Der Niederhalter 30 ist an seinen Längsseiten nach oben gekröpft. Die so geschaffenen Anlageflächen verteilen die vom Federelement 31 eingeleitete Belaghaltekraft gleichmäßig innerhalb eines Bremsbelages derart, daß die Kraftrichtung jeweils auf die Aufnahmeflächen 19 bzw. die Enden der Aufnahmeflächen 22 zu gerichtet ist. Somit ist eine optimale Haltewirkung gegen Verkippen des Belages im Belagschacht 17 erreicht, welches durch ein Mitnahmemoment beim Bremsen hervorgerufen wird. Diese Wirkung stellt sich auch ein, wenn die Anlageflächen des Niederhalters schräg nach unten gerichtet sind bzw. aufeinander zugerichtet sind.

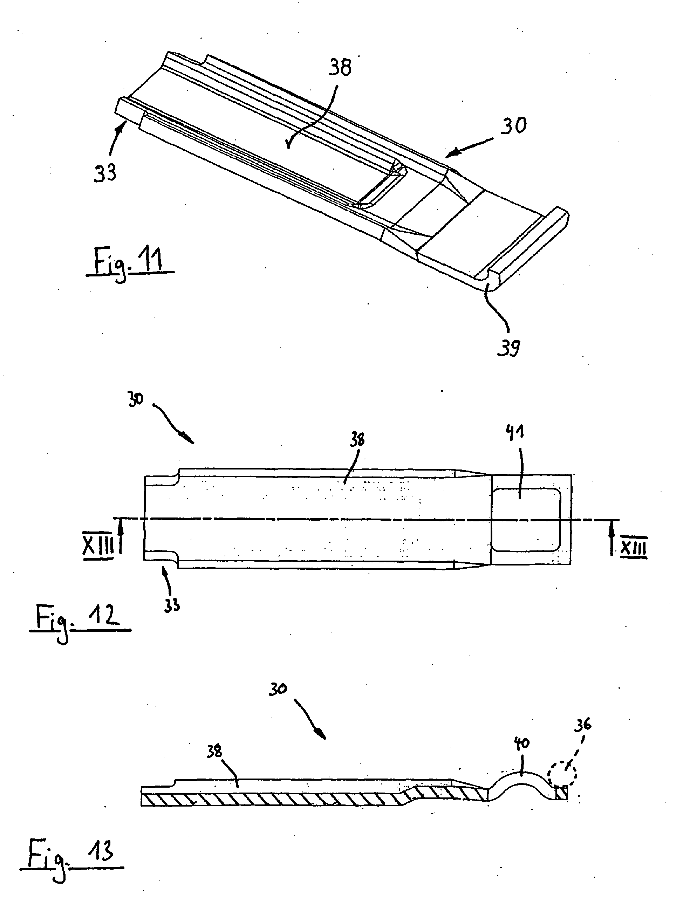

Wie die Fign. 11 bis 13 anhand der dort dargestellten Niederhalter 30 erkennen lassen, kann der Niederhalter 30 mit einer in seiner Längserstreckung verlaufenden Sicke verstärkt sein. Die Tiefe der Sicke 38 ist so dimensioniert, daß diese über die gesamte Standzeit der Verschleißteile keinen Kontakt zum Bremsbelag 3, 4 bzw. zur Rückenplatte 5 erhält. Der Niederhalter 30 kann vorteilhaft ein in Umformtechnik hergestelltes, leichtes und gleichwohl starres Metallteil sein.

Bei der Ausführung des Niederhalters 30 nach Fig. 11 ist dieser am bremsgehäuseseitigen Ende 30 mit einer leichten Biegung 39 versehen, welche sich um das Federauge 35 herum legt. Im verschlossenen Zustand wird somit erreicht, das der Niederhalter 30 zwischen Bremsgehäuse und dem Befestigungsbolzen 36 in Richtung seiner Längserstreckung gehalten wird.

Eine weitere Ausführungsform eines Niederhalters 30 ist in den Fign. 12 und 13 dargestellt. Auf der Seite des Befestigungsbolzens 36 ist der Niederhalter 30 mit einer halbkreisförmigen Aufwölbung 40 versehen, die vor dem Bolzen 36 zur Anlage kommt, wie dies die die Position des Bolzens 36 veranschaulichende Strichkontur zeigt. Auch hierdurch wird eine Sicherung des Niederhalters 30 in dessen Längserstreckung erreicht. Im Bereich der Aufwölbung 40 ist der Niederhalter 30 mit einer Ausnehmung 41 versehen, die aus fertigungstechnischen Gründen vorgesehen ist. Der Niederhalter 30 wird nämlich zum Schutz vor Korrosion mit einer Oberflächenbeschichtung versehen, die in einem Tauchbad aufgebracht wird. Die Ausnehmung 41 dient als Halteelement bei der Beschichtung des Niederhalters 30 im Tauchbad.

### Bezugszeichenliste

- 1: Bremsscheibe
- 2: Bremsscheiben-Mittelebene
- 3: Bremsbelag
- 4: Bremsbelag
- 5: Rückenplatte
- 6: Reibbelag
- 7: Vorsprung
- 10: Bremsgehäuse, Bremssattel
- 11: Bremsrahmen
- 12: Bremsträger
- 13: Gleitsattelführung
- 16: Druckstempel
- 17: Belagschacht
- 18: Aufnahmefläche
- 19: Aufnahmefläche
- 21: Aufnahmefläche
- 22: Aufnahmefläche
- 23: Bremsbelag-Mittelebene
- 24: Außenrand
- 25: Ausnehmung
- 25a: Vorsprung
- 25b: Vorsprung
- 26: Flanke
- 27: Flanke
- 28: Zwischenbereich
- 30: Niederhalter
- 31: Federelement, Blattfeder
- 32: Abstützungsort, Krafteinleitungspunkt
- 33: Ende des Niederhalters
- 33a: Ende der Blattfeder
- 34: Ausnehmung
- 35: Federauge
- 36: Befestigungsbolzen
- 37: Öffnung
- 38: Rinne, Sicke
- 39: Biegung
- 40: Aufwölbung
- 41: Ausnehmung

- E1: Anlageebene
- E2: Anlageebene
- S1: Spiel
- S2: Spiel

## Patentansprüche

1. Fahrzeug-Scheibenbremse mit beiderseits einer Bremsscheibe (1) in Belagschächten (17) angeordneten Bremsbelägen (3, 4), die sich jeweils aus einer Rückenplatte (5) und einem der Bremsscheibe (1) zugewandten Reibbelag (6) zusammensetzen, wobei die Bremsbeläge (3, 4) zu ihrer Aufnahme in dem jeweiligen Belagschacht (17) mit ersten, an der Umfangskontur der Rückenplatte (5) ausgebildeten Aufnahmeflächen (21) zur Übertragung der Bremsreaktionskräfte in Drehrichtung, sowie zweiten Aufnahmeflächen (22) zur Abstützung der Bremsbeläge (3, 4) zur Scheibenbrems-Drehachse hin versehen sind, und die Bremsbeläge (3, 4) gegen ein Herausfallen nach außen durch einen Niederhalter (30) gesichert sind, der sich quer zu den Bremsbelägen (3, 4) über die Belagschächte (17) erstreckt, und gegen den die Bremsbeläge (3, 4) mit ihrer Rückenplatte (5) von unten anliegen,
**dadurch gekennzeichnet,**
**daß** sich auf der Außenseite des Niederhalters (30) ein am Bremssattel bzw. -gehäuse befestigtes Federelement (31) abstützt.

2. Fahrzeug-Scheibenbremse nach Anspruch 1, **dadurch gekennzeichnet, daß** die Rückenplatten (5) im Bereich des Anliegens an dem Niederhalter (30) mit einer Ausnehmung (25) versehen sind, in die hinein sich der Niederhalter (30) erstreckt.

3. Fahrzeug-Scheibenbremse nach Anspruch 2,
**dadurch gekennzeichnet,**
**daß** die Ausnehmung (25) in der Rückenplatte (5) flächig gegen den Niederhalter (30) anliegt.

4. Fahrzeug-Scheibenbremse nach Anspruch 3,
**dadurch gekennzeichnet,**
**daß** die Ausnehmung (25) zu beiden Seiten Flanken (26, 27) aufweist, und daß beide Flanken (26, 27) zugleich gegen den Niederhalter (30) anliegen.

5. Fahrzeug-Scheibenbremse nach Anspruch 4,
**dadurch gekennzeichnet,**
**daß** die Flanken (26, 27) schräg zur Bremsbelag-Mittellinie (23) verlaufen.

6. Fahrzeug-Scheibenbremse nach einem der Ansprüche 4 und/oder 5,
**dadurch gekennzeichnet,**
**daß** die Flanken (26, 27) einen Zwischenbereich (28) einschließen, der nicht gegen den Niederhalter (30) anliegt.

7. Fahrzeug-Scheibenbremse nach Anspruch 5 und/oder 6,
**dadurch gekennzeichnet,**
**daß** der Niederhalter (30) ein langgestreckter Bügel ist, der die Querschnittsform eines sich zur Scheibenbrems-Drehachse hin verjüngenden Trapezes aufweist.

8. Fahrzeug-Scheibenbremse nach einem der vorangehenden Ansprüche,
**dadurch gekennzeichnet,**
**daß** der Niederhalter (30) starr ist.

9. Fahrzeug-Scheibenbremse nach Anspruch 8,
**dadurch gekennzeichnet,**
**daß** der Niederhalter (30) aus einem Metallprofil besteht.

10. Fahrzeug-Scheibenbremse nach einem der vorangehenden Ansprüche,
**dadurch gekennzeichnet,**
**daß** der Niederhalter (30) mit seinen Enden bis in Öffnungen oder Ausnehmungen (34) des Bremssattels bzw. -gehäuses hinein ragt.

11. Fahrzeug-Scheibenbremse nach Anspruch 10,
**dadurch gekennzeichnet,**
**daß** auch das Federelement (31) mit seinen Enden bis in die Öffnungen bzw. Ausnehmungen (34) hinein ragt.

12. Fahrzeug-Scheibenbremse nach einem der vorangehenden Ansprüche,
**gekennzeichnet durch**
eine Abstützung des Federelementes (31) derart, daß dessen Krafteinleitungspunkt (32) im Falle neuer, vollständiger Reibbeläge (6) auf der einen, und im Falle vollständig verschlissener Reibbeläge (6) auf der anderen Seite der Bremsscheiben-Mittelebene (2) liegt.

13. Fahrzeug-Scheibenbremse nach Anspruch 11,
**dadurch gekennzeichnet,**
**daß** der maximale Versatz des Krafteinleitungspunktes (32) in Bezug auf die Bremsscheiben-Mittelebene (2) geringer ist, als das Maß des zulässigen Reibbelag-Verschleißes.

14. Fahrzeug-Scheibenbremse nach einem der vorangehenden Ansprüche,
**dadurch gekennzeichnet,**
**daß** das Federelement (31) eine sich längs des Niederhalters (30) erstreckende Blattfeder ist.

15. Fahrzeug-Scheibenbremse nach Anspruch 13,
**dadurch gekennzeichnet,**
**daß** das eine Ende der Blattfeder (31) als um einen Befestigungsbolzen (36) geführtes Federauge (35), als Teilkontur eines Federauges oder als Abwinklung ausgebildet ist.

16. Fahrzeug-Scheibenbremse nach einem der vorhergehenden Ansprüche,
**dadurch gekennzeichnet,**
**dass** der Niederhalter (30) ein urnformtechnisch hergestelltes Profilteil ist.

17. Fahrzeug-Scheibenbremse nach einem der vorhergehenden Ansprüche,
**dadurch gekennzeichnet,**
**dass** die Bremsbeläge (3, 4) an ihrer Rückenplatte einen Vorsprung (7) aufweisen.

18. Fahrzeug-Scheibenbremse nach Anspruch 17,
**dadurch gekennzeichnet,**
**dass** die Bremsbeläge (3, 4) eine Aufnahmefläche (22) an der Umfangskontur der Rückenplatte (5) und eine weitere Aufnahmefläche (22) an der Unterseite des Vorsprungs (7) aufweisen.

19. Fahrzeug-Scheibenbremse nach einem der Ansprüche 17 und/oder 18,
**dadurch gekennzeichnet,**
**dass** der Vorsprung (7) nach radial außen hin bündig mit der Ausnehmung (25) endet.

20. Fahrzeug-Scheibenbremse nach einem der vorhergehenden Ansprüche
**dadurch gekennzeichnet,**
**dass** der fahrzeugaußen angeordnete Bremsbelag (4) und der fahrzeuginnen angeordnete Bremsbelag (3) baugleich sind.

## Claims

1. Vehicle disc brake comprising brake linings (3, 4) arranged in linking shafts (17) on both sides of a brake disc (1), said brake linings being composed in each case of a backplate (5) and a friction lining (6) which faces towards the brake disc (1), wherein the brake linings (3, 4), for the purpose of being held in the respective lining shaft (17), are provided with first locating surfaces (21) formed on the peripheral contour of the backplate (5) and designed to transmit the brake reaction forces in the direction of rotation, and second locating surfaces (22) designed to support the brake linings (3, 4) in the direction of the disc brake rotation axis, and the brake linings (3, 4) are secured against falling out by a holding-down device (30) which extends transversely to the brake linings (3, 4) across the lining shafts (17), and against which the brake linings (3, 4) bear with their backplate (5) from below, **characterised in that** a spring element (31) fixed to the brake caliper or brake housing is supported on the outer side of the holding-down device (30).

2. Vehicle disc brake according to claim 1, **characterised in that** the backplates (5) in the region where they bear against the holding-down device (30) are provided with a recess (25), into which the holding-down device (30) extends.

3. Vehicle disc brake according to claim 2, **characterised in that** the recess (25) in the backplate (5) bears extensively against the holding-down device (30).

4. Vehicle disc brake according to claim 3, **characterised in that** the recess (25) has flanks (26, 27) on both sides, and **in that** both flanks (26, 27) bear simultaneously against the holding-down device (30).

5. Vehicle disc brake according to claim 4, **characterised in that** the flanks (26, 27) run at an angle to the brake lining centre line (23).

6. Vehicle disc brake according to one of claims 4 and/or 5, **characterised in that** the flanks (26, 27) enclose an intermediate region (28) which does not bear against the holding-down device (30).

7. Vehicle disc brake according to claim 5 and/or 6, **characterised in that** the holding-down device (3D) is an elongate clamp which has the cross-sectional shape of a trapezium tapering towards the disc brake rotation axis.

8. Vehicle disc brake according to one of the preceding claims, **characterised in that** the holding-down device (30) is rigid.

9. Vehicle disc brake according to claim 8, **characterised in that** the holding-down device (30) consists of a metal profile.

10. Vehicle disc brake according to one of the preceding claims, **characterised in that** the holding-down device (30) protrudes with its ends into openings or recesses (34) of the brake caliper or brake housing.

11. Vehicle disc brake according to claim 10, **characterised in that** the spring element (31) also protrudes with its ends into the openings or recesses (34).

12. Vehicle disc brake according to one of the preceding claims, **characterised by** a support of the spring element (31) such that its force introduction point (32) lies on one side of the brake disc centre plane (2) in the case of new, full friction linings (6), and lies on the other side thereof in the case of completely worn friction linings (6).

13. Vehicle disc brake according to claim 11, **characterised in that** the maximum shift of the force introduction point (32) with respect to the brake disc centre plane (2) is less than the degree of permissible friction lining wear.

14. Vehicle disc brake according to one of the preceding claims, **characterised in that** the spring element (31) is a leaf spring which extends along the holding-down device (30).

15. Vehicle disc brake according to claim 13, **characterised in that** one end of the leaf spring (31) is designed as a spring eye (35) guided around a fixing bolt (36), as a partial contour of a spring eye or as an angled potion.

16. Vehicle disc brake according to one of the preceding claims, **characterised in that** the holding-down device (30) is a profile part produced by moulding.

17. Vehicle disc brake according to one of the preceding claims, **characterised in that** the brake linings (3, 4) have a protrusion (7) on their backplate.

18. Vehicle disc brake according to claim 17, **characterised in that** the brake linings (3, 4) have a locating surface (22) on the peripheral contour of the backplate (5) and a further locating surface (22) on the underside of the protrusion (7).

19. Vehicle disc brake according to one of claims 17 and/or 18, **characterised in that** the protrusion (7) ends flush with the recess (25) in the radially outward direction.

20. Vehicle disc brake according to one of the preceding claims, **characterised in that** the brake lining (4) arranged towards the outside of the vehicle and the brake lining (3) arranged towards the inside of the vehicle are of identical design.

## Revendications

1. Frein à disque pour véhicule, comprenant des garnitures de frein (3, 4) disposées de part et d'autre d'un disque de frein (1) dans des logements de garniture (17) et qui se composent respectivement d'une plaque arrière (5) et d'une garniture de friction (6) tournée vers le disque de frein (1), les garnitures de frein (3, 4) étant munies pour leur réception dans le logement de garniture (17) respectif de premières faces de réception (21), réalisées au niveau du contour périphérique de la plaque arrière (5), pour transmettre les forces de réaction de freinage dans le sens de la rotation, ainsi que des deuxièmes faces de réception (22) pour soutenir les garnitures de frein (3, 4) dans la direction de l'axe de rotation du frein à disque, et dans lequel les garnitures de frein (3, 4) sont retenues pour ne pas tomber vers l'extérieur par un dispositif de retenue (30) qui s'étend transversalement aux garnitures de frein (3, 4) à travers les logements de garniture (17) et contre lequel les garnitures de frein (3, 4) s'appliquent avec leur plaque arrière (5) depuis le bas,
**caractérisé en ce que** sur le côté extérieur du dispositif de retenue (30) s'appuie un élément à ressort (31) fixé à l'étrier de frein ou au boîtier de frein.

2. Frein à disque pour véhicule selon la revendication 1, **caractérisé en ce que** les plaques arrière (5) sont pourvues dans la zone de l'application contre le dispositif de retenue (30) d'un évidement (25) dans lequel s'étend le dispositif de retenue (30).

3. Frein à disque pour véhicule selon la revendication 2, **caractérisé en ce que** l'évidement (25) s'applique dans la plaque arrière (5) de façon plane contre le dispositif de retenue (30).

4. Frein à disque pour véhicule selon la revendication 3, **caractérisé en ce que** l'évidement (25) présente sur les deux côtés des flancs (26, 27) et **en ce que** les deux flancs (26, 27) s'appliquent en même temps contre le dispositif de retenue (30).

5. Frein à disque selon la revendication 4, **caractérisé en ce que** les flancs (26, 27) s'étendent de façon oblique par rapport à la médiane de la garniture de frein (23).

6. Frein à disque pour véhicule selon l'une des revendications 4 et/ou 5, **caractérisé en ce que** les flancs (26, 27) entourent une zone intermédiaire (28) qui ne s'applique pas contre le dispositif de retenue (30).

7. Frein à disque pour véhicule selon la revendication 5 et/ou 6, **caractérisé en ce que** le dispositif de retenue (30) est une barrette allongée qui présente la forme de section transversale d'un trapèze s'amincissant vers l'axe de rotation du frein à disque.

8. Frein à disque pour véhicule selon l'une des revendications précédentes, **caractérisé en ce que** le dispositif de retenue (30) est rigide.

9. Frein à disque pour véhicule selon la revendication 8, **caractérisé en ce que** le dispositif de retenue (30) se compose d'un profilé métallique.

10. Frein à disque pour véhicule selon l'une des revendications précédentes, **caractérisé en ce que** le dispositif de retenue (30) fait saillie avec ses extrémités jusque dans des ouvertures ou évidements (34) de l'étrier de frein ou du boîtier de frein.

11. Frein à disque pour véhicule selon la revendication 10, **caractérisé en ce que** l'élément de ressort (31) fait également saillie avec ses extrémités jusque dans les ouvertures ou évidements (34).

12. Frein à disque pour véhicule selon l'une des revendications précédentes, **caractérisé par** un appui de l'élément à ressort (31) de telle sorte que le point d'application de force (32) de celui-ci se trouve pour des garnitures de friction (6) neuves intactes d'un côté, et pour des garnitures de friction (6) complètement usées de l'autre côté du plan médian du disque de frein (2).

13. Frein à disque pour véhicule selon la revendication 11, **caractérisé en ce que** le décalage maximal du point d'application de force (32) par rapport au plan médian du disque de frein (2) est inférieur à la mesure de l'usure de garniture de friction admissible.

14. Frein à disque pour véhicule selon l'une des revendications précédentes, **caractérisé en ce que** l'élément à ressort (31) est un ressort à lame s'étendant le long du dispositif de retenue (30).

15. Frein à disque pour véhicule selon la revendication 13, **caractérisé en ce qu'**une extrémité du ressort à lame (31) est réalisée comme un oeillet de ressort (35) guidé autour d'un axe de fixation (36), comme un contour partiel d'un oeillet de ressort ou comme un coude.

16. Frein à disque pour véhicule selon l'une des revendications précédentes, **caractérisé en ce que** le dispositif de retenue (30) est une pièce profilée fabriquée par une technique de façonnage.

17. Frein à disque pour véhicule selon l'une des revendications précédentes, **caractérisé en ce que** les garnitures de frein (3, 4) présentent une saillie (7) sur leur plaque arrière.

18. Frein à disque pour véhicule selon la revendication 17, **caractérisé en ce que** les garnitures de frein (3, 4) présentent une face de réception (22) sur le contour périphérique de la plaque arrière (5) et une autre face de réception (22) sur le côté inférieur de la saillie (7).

19. Frein à disque pour véhicule selon l'une des revendications 17 et/ou 18, **caractérisé en ce que** la saillie (7) se termine radialement vers l'extérieur en affleurement avec l'évidement (25).

20. Frein à disque pour véhicule selon l'une des revendications précédentes, **caractérisé en ce que** la garniture de frein (4) disposée à l'extérieur du véhicule et la garniture de frein (3) disposée à l'intérieur du véhicule sont de construction identique.
